# EUROPÄISCHE PATENTSCHRIFT

(11) **EP 3 592 669 B1**
(45) Veröffentlichungstag und Bekanntmachung des Hinweises auf die Patenterteilung: **04.05.2022**
(21) Anmeldenummer: 18706733.5
(22) Anmeldetag: 21.02.2018
(51) Int. Cl.: B65G 1/137, B65G 1/04

(54) **VERFAHREN ZUR AUSLAGERUNG VON WAREN AUS EINEM LAGER ZUR AUFTRAGSERFÜLLUNG**
METHOD FOR REMOVING GOODS FROM A STORAGE DEVICE IN ORDER TO FULFILL AN ORDER
PROCÉDÉ POUR EXTRAIRE DES MARCHANDISES SE TROUVANT DANS UN STOCK POUR EXÉCUTER UNE COMMANDE

(30) Priorität: 09.03.2017 DE 102017104990
(43) Veröffentlichungstag der Anmeldung: 15.01.2020
(73) Patentinhaber: Dematic GmbH, 63150 Heusenstamm (DE)
(72) Erfinder: MEURER, Hans Christoph, 55234 Framersheim (DE)
(74) Vertreter: Moser Götze & Partner Patentanwälte mbB
(86) Internationale Anmeldenummer: PCT/EP2018/054291
(87) Internationale Veröffentlichungsnummer: WO 2018/162239

(56) Entgegenhaltungen:
- EP-A1- 0 776 308
- EP-A1- 2 551 218
- EP-A1- 2 741 977
- EP-A1- 2 949 604
- EP-B1- 0 776 308
- EP-B1- 1 964 792
- EP-B1- 2 741 977

## Beschreibung

Die Erfindung betrifft ein Verfahren zur Auslagerung von Waren zur Auftragserfüllung aus einem Verteilzentrum mit einem Lager, das Lagerregale mit Lagerregalgassen aufweist, wobei der Auftrag eine Zusammenstellung von Waren aus sortenreinen und gemischten Gebinden umfasst, die Waren zunächst in Form von sortenreinen Gebinden in das Lagerregal eingelagert werden und nach Vorliegen des Auftrags alle dem Auftrag zugewiesenen Waren als aus einer bestimmten Auftragslagerregalgasse des Lagerregals ausgelagert werden.

Beim Kommissionieren oder Zusammenstellen von Aufträgen aus Waren auf sortenreinen Transporteinheiten oder Gebinden, wie z.B. Artikeln, Behältern, ist es notwendig, diejenigen Transporteinheiten, die die zu einem bestimmten Auftrag gehörende Waren tragen, gemeinsam und ggf. sortiert zur Verfügung zu stellen. Dazu ist es üblich, die Transporteinheiten mit Waren eines Auftrags zwischenzuspeichern (puffern), bis alle für den Auftrag notwendigen Waren als Transporteinheiten vorliegen. Anschließend werden diese dann gemeinsam auf eine Sammelstrecke aufgegeben, die sie z. B. zur Palettierung, Packstation, Warenausgabe, Versand etc. führt. Sie werden also auftragsrein ausgelagert.

Beim Zusammenstellen von Aufträgen müssen unterschiedliche Waren aus verschiedenen Transporteinheiten entnommen und auftragsgemäß zusammengestellt werden. Gleichzeitig können Aufträge neben solchen kommissionierten gemischten Transporteinheiten (gemischte Gebinde), auch ganze Transporteinheiten, also sortenreine Gebinde, umfassen (siehe oben). In diesem Fall müssen Aufträge aus zwei unterschiedlichen Sorten von Transporteinheiten zusammengestellt werden, welche eine unterschiedliche Vorbehandlung, wie beispielsweise einer Kommissionierung, umfassen.

In Kommissionierstationen werden dazu z.B. Waren, die zwar ebenfalls zur Erfüllung eines Auftrags benötigt werden, aber nur in geringerer Menge, aus bereitgestellten Vorratseinheiten entnommen und gemäß dem Auftrag in einen Auftragsbehälter gegeben (kommissioniert). Die so kommissionierten gemischten Auftragsbehälter werden, wie oben dargestellt, ebenfalls zur Palettierung, Packstation, Warenausgabe, Versand etc. transportiert, um den bestimmten Auftrag gemeinsam mit den sortenreinen Behältern (Gebinde) zu erfüllen.

Zu einem (Hoch-)Regallager gehört ein Zufuhr- oder Einlagerungsbereich, über den die Waren angeliefert und vereinzelt werden und von dem die Regalbediengeräte Waren bzw. sortenreine Gebinde zwecks Einlagerns abholen, die sogenannte Vorzone. Analog wird ein Auslagerungsbereich benötigt, an dem die Regalbediengeräte die Waren nach dem Auslagern abgeben, der ebenfalls der Vorzone zugerechnet wird. Bei automatischen Kommissionierlagern sind über die Vorzone oft direkt Kommissionierplätze angeschlossen. In der Vorzone erfolgt auch meist die Identifizierung der Waren für das Lagerverwaltungssystem bzw. den Materialflussrechner.

Aus der eigenen EP 1 964 792 B1 ist ein Verfahren zum Bereitstellen von Transporteinheiten aus einem Lager in einer gewünschten Reihenfolge auf mindestens einer Sammelstrecke bekannt. Dabei werden Regalbediengeräte in jeder Lagerregalgasse, Auslagerlifte und Auslagerbahnen aufeinander derart abgestimmt gesteuert und mit Gütern beaufschlagt, dass diese letztendlich sortiert auf der Sammelstrecke enden bzw. von dieser abgegeben werden.

Die Steuerung und Abstimmung ist somit relativ komplex und benötigt in der sogenannten Vorzone, also dem Bereich außerhalb des eigentlichen Regals, einen ersichtlichen technischen Aufwand.

Aus der EP 2 741 977 A1 ist außerdem ein Verfahren zum Bereitstellen von Transporteinheiten aus einem Lager in einer gewünschten Reihenfolge bekannt, bei dem zwischen zwei angrenzenden Lagerregalen ein direkter Austausch von Transporteinheiten von einer Lagerregalgasse in eine benachbarte Lagerregalgasse über Querförderplätze in den Lagerregalen selbst erfolgt. Dies ermöglicht ein Sortieren innerhalb der Regale bzw. Gassen selbst und auf eine Sortierung in der Vorzone kann verzichtet werden. EP 2 741 977 A1 offenbart ein Verfahren zur Auslagerung von Waren zur Auftragserfüllung aus einem Verteilzentrum mit einem Lager, das Lagerregale mit Lagerregalgassen aufweist, wobei der Auftrag eine Zusammenstellung von Waren aus sortenreinen und gemischten Gebinden ist, die Waren zunächst in Form von sortenreinen Gebinden in die Lagerregale eingelagert werden und nach Vorliegen des Auftrags alle dem Auftrag zugewiesenen Waren aus einer bestimmten Auftragslagerregalgasse der Lagerregale ausgelagert werden, wozu als sortenreine Gebinde in den Lagerregalen vorliegende Waren, die zur Erfüllung des Auftrags nötig sind, aber nicht innerhalb der bestimmten Auftragslagerregalgasse der Lagerregale vorliegen, innerhalb der Lagerregale durch einen Quertransport aus einer anderen Lagerregalgasse in die Auftragslagerregalgasse umgelagert werden.

Aufgabe der Erfindung ist es demgegenüber, ein Verfahren bereitzustellen, das bei verringertem technischen und verfahrenstechnischen Aufwand eine Auslagerung von Waren solcher gemischten Aufträge erlaubt.

Diese Aufgabe wird durch das in Anspruch 1 wiedergegebene Verfahren gelöst.

Erfindungsgemäß ist erkannt worden, dass ein Verfahren zur Auslagerung von Waren aus einem Lager zur Auftragserfüllung vereinfacht bereitgestellt werden kann, wenn dazu als sortenreine Gebinde im Lagerregal vorliegende Waren, die zur Erfüllung des Auftrags nötig sind, aber nicht innerhalb der bestimmten Auftragslagerregalgasse des Lagerregals vorliegen, innerhalb des Lagerregals durch einen Quertransport aus einer anderen Lagerregalgasse in die Auftragslagerregalgasse umgelagert werden, und dazu gemischte Gebinde des Auftrags durch Kommissionieren aus sortenreinen Gebinden erstellt werden und dazu Kommissionierstationen mit entsprechenden sortenreinen Gebinden aus demselben Lagerregal versorgt werden und die damit erstellten gemischten Gebinde in die Auftragslagerregalgasse des Lagerregals eingelagert werden, und schließlich alle Waren des Auftrags bestehend aus sortenreinen Gebinden und gemischten Gebinden aus der bestimmten Auftragslagerregalgasse auftragsrein ausgelagert werden.

Mit anderen Worten, dasselbe Lager dient gleichzeitig zur Auftragskonsolidierung und als Nachschub bzw. Vorrat für die Kommissionierung. Mit Lager ist hiermit im Gegensatz zum Begriff Verteilzentrum nicht der übergeordnete Begriff Lager im Sinne des englischen "Warehouse", sondern das eigentliche Lager zur physikalischen Ablage der Waren gemeint.

Unter Gebinde wird vorliegend eine Packeinheit als Handelseinheit und Ladeeinheit für die Warenverteilung verstanden. Es handelt sich um eine Zusammenfassung von Produkten gleicher Art oder verschiedener Art zur gemeinsamen Handhabung in der Logistik (z.B. Bestellung durch den Einzelhandel). Gebinde steht dabei sowohl für eine Packung, die Gesamtheit aus Packgut und Verpackung, ein Packstück, das zu transportierende Kollo sowie eine aus einem Stück bestehende Verpackung, als Leergebinde.

Erfindungsgemäß kann eine sortierte Auslagerung von Waren gemischter Aufträge vereinfacht bereitgestellt werden, wenn als sortenreine Gebinde vorliegende Waren, die zur Erfüllung des Auftrags nötig sind, aber nicht innerhalb der bestimmten Auftragslagerregalgasse des Lagerregals vorliegen, innerhalb des Lagerregals durch einen Quertransport aus einer anderen Lagerregalgasse in die Auftragslagerregalgasse umgelagert werden, bei anschließendem Auslagern aller Waren als sortenreine und gemischte Gebinde aus der Auslagerregalgasse.

Mit anderen Worten, Waren eines Auftrags, welche nicht in der Menge eines vollständigen sortenreinen Gebindes benötigt werden, werden an einer Kommissionierstation zu gemischten Gebinden kommissioniert. Anschließend wird dieses gemischte Gebinde dann in eine Lagerregalgasse eingelagert und zwar die bestimmte Auftragslagerregalgasse. Die Kommissionierstation wird dabei durch eingelagerte sortenreine Gebinde aus demselben Lagerregal mit Waren versorgt. Um den Auftrag zu vervollständigen, werden darauf folgend sortenreine Gebinde, welche für den Auftrag benötigt werden, durch Quertransport innerhalb der Lagerregale der Auftragslagerregalgasse zugeführt, welche für die Waren des betreffenden Auftrags vorgesehen ist.

Durch ein solches Vorgehen wird die Einlagerung von sortenreinen Gebinden durch den Kommissionierbetrieb nicht behindert oder unterbrochen, ohne dass eine gesonderte Lagerhaltung dazu erforderlich wäre. Somit können Waren schnell und effizient in die Lagerregale eingelagert werden und werden nur dann wieder entnommen, wenn Waren zur Versorgung der Kommissionierstation benötigt werden oder alle Waren zur Auftragserfüllung vorhanden sind.

Die mindestens eine Kommissionierstation kann dabei zum Beispiel in das Lager integriert angeordnet sein, aber auch als eigenständiges System mit Warenpuffern ausgeführt sein. Auch ein direkter Anschluss an eine bestimmte oder eine Gruppe von Lagerregalgassen ist beispielsweise möglich. Die Kommissionierstation kann dabei in einer Kommissionierebene, z.B. gleich der Auslagerebene, angeordnet sein, oder aber auch in mehreren Ebenen oder dedizierten Kommissionierbereichen.

Auch kann unabhängig von der Kommissionierung von Waren für in einem Auftrag vorgesehene gemischte Gebinde, eine Sortierung der für einen Auftrag vorgesehenen Waren innerhalb des Lagers stattfinden. Eine verbindende Fördertechnik über die Gassen in der Vorzone kann dadurch eingespart werden und ein zusätzlicher Sortierschritt ist nicht erforderlich.

Nach der Erfindung wird die Auslagerregalgasse durch die Einlagerung der kommissionierten gemischten Gebinde bestimmt.

Somit ist eine "Quersortierung" von Waren innerhalb des Lagers bzw. Lagerregals nur in eine Richtung nötig: von der Lagerregalgasse der sortenreinen Gebinde in die Auftragslagerregalgasse. Sortiervorgänge mit Querförderung von sortenreinen und zusätzlich gemischten Gebinden finden damit nicht statt, was die Sortierung innerhalb der Lagerregale erheblich vereinfacht.

Vorteilhaft ist außerdem, dass Waren sortiert gemäß einer späteren Auspackreihenfolge ausgelagert werden können, um sie in dieser Reihenfolge auch auf diese Paletten bzw. Rollwagen etc. zur Auslieferung zu packen.

Hierdurch kann beispielsweise das spätere Entladen des Auftrags von dem Ladungsträger (z.B. Palette oder Rollwagen) im Lager bzw. Ladenlokal vereinfacht werden, indem der Auftrag in einem sog. Shop-Layout sortiert wird. Unter Shop-Layout versteht man, dass die Waren in umgekehrter Reihenfolge zu der späteren Auspackreihenfolge eingepackt werden. Die Auspackreihenfolge wird dabei bestimmt durch die Regal- und Warenanordnung im Ladenlokal. Üblicherweise sind somit auch bestimmte Waren gruppiert angeordnet, wie Körperpflegemittel oder Putzmittel etc.

Eine weitere vorteilhafte Ausführung der Erfindung sieht vor, dass Waren innerhalb der Lagerregalgassen durch Regalbediengeräte, insbesondere Shuttle-Fahrzeuge bewegt werden.

So kann eine besonders hohe Auslagerleistung erreicht und eine flexible und schnelle Sortierung innerhalb des Lagers gewährleistet werden.

Besonders bevorzugt ist auch, dass Waren zwischen benachbarten Lagerregalgassen über Querförderplätze innerhalb benachbarter Lagerregale mittels Bewegung durch die Lastaufnahmemittel der Regalbediengeräte selbst quertransportiert werden.

Durch aktives "Durchreichen" oder "Durchschieben" der Waren durch die Lastaufnahmemittel der Regalbediengeräte oder Shuttle-Fahrzeuge kann ein Quertransport durchgeführt werden ohne eine Funktionalisierung der Querförderplätze selbst, das heißt beispielsweise ohne Ausrüstung der Querförderplätze mit Fördermitteln wie Förderbänder oder Förderrollen. Der Quertransport durch Regalbediengeräte oder Shuttle-Fahrzeuge stellt damit eine konstruktive und technische Vereinfachung dar.

Ein Quertransport der Waren kann ebenfalls zwischen Lagerregalgassen über gassenwechselnde Regalbediengeräte stattfinden, wenn z.B. sogenannte Roaming Shuttle eingesetzt werden, die also mit und ohne Hilfe eines Lifts aus der jeweiligen Gasse fahren und in andere Gassen des Lagers oder Ebenen fahren. Ebenso kann ein Gassenwechsel über dedizierte Fahrwege stattfinden, die mittels Kreuzungen oder Kurven die Fahrt eines Regalbediengeräts oder Shuttles von einer Gasse in die nächste erlauben, ohne Umsetzen.

Weitere Merkmale und Einzelheiten der Erfindung ergeben sich aus der nachfolgenden Beschreibung der Zeichnung.

Figur 1 zeigt eine schematische Darstellung eines blockartig dargestellten Ablaufs eines Verfahrens zum Auslagern von Waren aus einem Verteil- und Nachschubzentrum mit einem Lager.

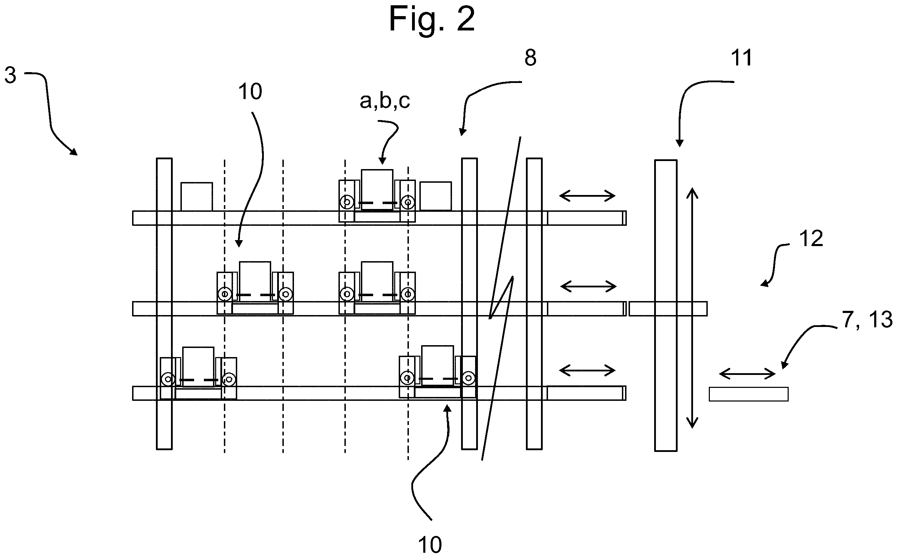

Figur 2 zeigt eine schematische Seitenansicht des Lagers aus Figur 1 und

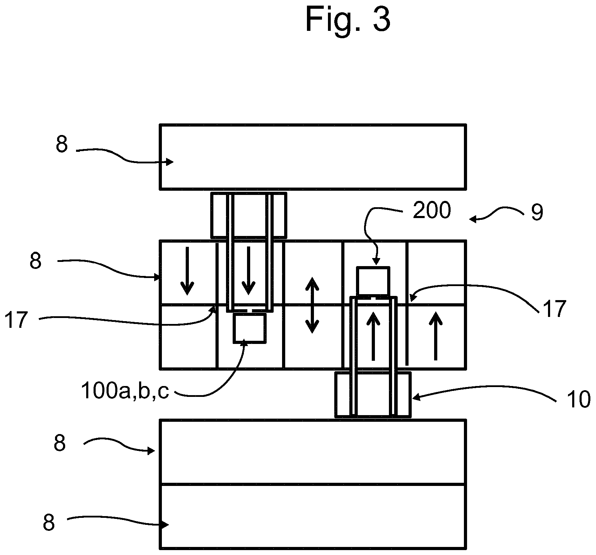

Figur 3 eine schematische Draufsicht auf einen Quertransport im Lager der Figur 2.

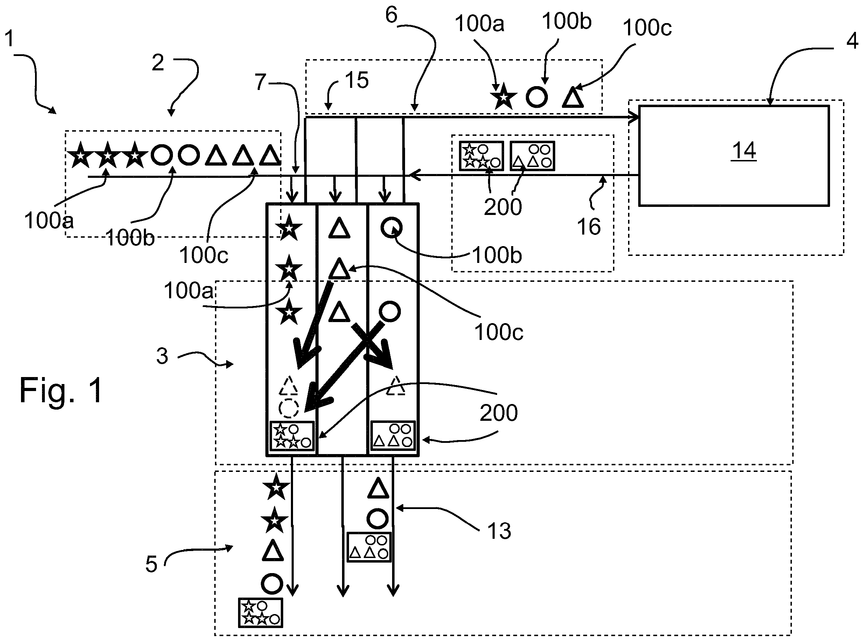

Die Figur 1 zeigt eine Draufsicht auf ein als Ganzes mit 1 bezeichneten Verteil- und Nachschubzentrums.

Es umfasst einen Eingangsbereich 2, der ein Palettenlager zum Lagern des Nachschubs an sortenreinen Waren a, b, c umfasst. Ferner ist ein Lagerbereich 3, ein Kommissionierbereich 4 und ein Ausgangsbereich 5 zur Auftragsfertigstellung (Verpackung und Versand) vorgesehen. Der Eingangsbereich 2, der Lagerbereich 3 und der Kommissionierbereich 4 sind über ein Fördersystem 6 verbunden.

Im Lagerbereich 3 werden die Waren a, b, c für die Aufträge eingelagert.

Über den Eingangsbereich 2 werden Waren a, b, c nach der Depalettierung in Form von sortenreinen Gebinden 100 über eine Förderstrecke 7 zur Einlagerung in Lagerregale 8 des Lagerbereichs 3 angefördert.

Hierbei werden die sortenreinen Gebinde 100 mit den Waren a, b, c mit unterschiedlicher Warensorte, dargestellt durch Stern-, Kreis- und Dreieck-Symbol, zunächst entsprechend einer optimierten Verteilung, die z. B. Warengruppen berücksichtigt, in die Lagerregale 8 eingelagert.

Der Lagerbereich 3 umfasst mehrebenen Lagerregale 8. Die Lagerregale 8 sind derart angeordnet, dass die nicht außen angeordneten Lagerregale 8 jeweils paarweise aneinander angrenzend angeordnet sind und einseitig eine Lagerregalgasse 9 aufweisen. Es stoßen also die jeweils innen liegenden Lagerregale 8 mit ihren "Rücken" aneinander an. Gegenüberliegende Lagerregale 8 müssen also zwischen sich eine Lagerregalgasse 9 aufweisen. Der Transport von Waren a, b, c innerhalb der Lagerregalgassen 9 erfolgt über Shuttle-Fahrzeuge 10.

Die Shuttle-Fahrzeuge 10 fahren längs der Regalgassen auf Schienen, in der jeweiligen Lagerebene. Die Shuttle-Fahrzeuge 10 entnehmen und beladen entsprechende Regalplätze in Querrichtung durch ein- und ausfahrbare Teleskoparme in bekannter Weise, wie z. B. in der eigenen EP 2 741 977 A1 offenbart ist.

Unterschiedliche Regalebenen der Lagerregalgassen 9 sind über Warenlifte 11 mit einer Auslagerebene 12 des Ausgangsbereichs 5 verbunden. Jeder Lagerregalgasse 9 beziehungsweise jeder Auftragslagerregalgasse 9 ist eine Ausgangs-Förderstrecke 13 zugeordnet, über welche die Waren aus der Gasse bzw. eines Auftrags ausgelagert werden.

Der Kommissionierbereich 4 umfasst mindestens eine Kommissionierstation 14 und ggf. ein Pufferlager für Quellgebinde für die Kommissionierung. Die Kommissionierstation 14 wird über eine Förderstrecke 15 mit Waren in Form von sortenreinen Gebinden 100a, b, c aus den Lagerregalen 8 des Lagerbereichs 3 versorgt.

Nach Vorliegen eines Auftrags werden in der Kommissionierstation Waren zu gemischten Gebinden 200 kommissioniert.

Gemischte Gebinde 200 sind durch rechteckige Symbole mit jeweils auftragsgemäßen unterschiedlichen Warensorten a, b, c dargestellt. Die kommissionierten gemischten Gebinde 200 werden über eine Eingangs-Förderstrecke 16 dem Lagerbereich 3 zugeführt und über Einlager-Förderstrecken 7 in die Lagerregale 8 eingelagert.

In den Lagerregalen 8 bzw. Lagerregalgassen 9 werden Waren somit in Form von sortenreinen Gebinden 100 und gemischten Gebinden 200 eingelagert und dienen zur Auftragserfüllung, wozu von einer bestimmten Lagerregalgasse 9 ein Auftrag entsprechend als sortenreine und gemischte Gebinde 100, 200 wieder ausgelagert wird. Der Auftrag umfasst also Waren in sortierten Gebinden 100 und gemischten Gebinden 200, die später auf Paletten oder Rollwagen gepackt ausgeliefert werden.

Sortenreine Gebinde 100 umfassen dabei ausschließlich Waren derselben Sorte. Gemischte Gebinde 200 umfassen gemischte Waren.

Innerhalb der Lagerregale 8 werden die Gebinde durch die Shuttle-Fahrzeuge 10, bewegt.

Innerhalb des Lagerbereichs 3 werden alle notwendigen Waren eines Auftrags in einer Lagerregalgasse 9, der sogenannten Auftragslagerregalgasse konsolidiert.

Dies bedeutet, dass gemischte Gebinde 200 durch ihre Einlagerung in eine bestimmte Lagerregalgasse 9 für die (restlichen) Waren des Auftrags diese Gasse als Auftragslagerregalgasse 9 festlegen bzw. bestimmen.

Für die Konsolidierung beziehungsweise Sortierung von Waren des Auftrags innerhalb der Lagerregale 8 können Waren durch Querförderung zwischen zwei benachbarten Lagerregalen 8 einem anderen Lagerregal 8 zugeführt werden.

In den Lagerregalen 8 sind dazu in jeder Ebene besondere Querförderplätze 17 zum Querfördern von Gebinden 100, 200 von einem Lagerregal 8 in ein benachbartes Lagerregal 8 vorgesehen, so dass ein Austausch der Gebinde innerhalb der Lagerregale 8 selber stattfindet und auf einen entsprechenden Aufwand in einer Vorzone verzichtet werden kann.

Die Querförderung findet durch die Lastaufnahmemittel der Shuttle-Fahrzeuge 10 statt. Diese schieben, wie in der EP 2 741 977 A1 beschrieben, die Transporteinheit von einem Regal ins benachbarte Regal, ohne weitere aktive Fördertechnik im Regal. Alternativ können die Shuttle 10 über Querschienen die Gassen wechseln und über entsprechende Lifte die Regalebenen. Dann spricht man vom Roaming Shuttle. Die Querschienen können mit Kreuzungen, Weichen oder Kurven versehen sein, um die Gassen ohne Umsetzen der Fahrzeuge zu wechseln.

In dem Ausgangsbereich 5 werden Waren eines Auftrags nach der Konsolidierung und Sortierung in einer auftragsreinen Reihenfolge auf Ausgangs-Förderstrecken 13 in der Auslagerebene 12 ausgelagert.

Dazu sind die unterschiedlichen Regalebenen der Lagerregalgassen 9 über Warenlifte 11 mit der Auslagerebene 12 verbunden. Jeder Lagerregalgasse 9 beziehungsweise jeder Auftragslagerregalgasse ist eine Ausgangs-Förderstrecke 13 zugeordnet, über welche die Waren bzw. Gebinde aus der Gasse ausgelagert werden.

Von dort aus gelangen sie zu der Auftragsabfertigung, wo eine Verpackung und ein Versand stattfinden. Dort kann auch eine Palettierung auf Paletten oder Rollwagen vorgenommen werden.

Das Verfahren kann wie folgt durchgeführt werden:
Zunächst werden sortenreine Gebinde 100 über eine erste Eingangs-Förderstrecke 7 des Fördersystems 6 angefördert und in Lagerregalgassen 9 eingelagert. Die Verteilung der sortenreinen Gebinde 100 auf die Lagerregalgassen 9 bei Einlagerung kann einerseits unabhängig von ihrer Sorte und unabhängig von einem Auftrag, also wahlfrei erfolgen. Andererseits können auch Warengruppen nach Shop-Layout gemeinsam gruppiert eingelagert werden. Dabei können auch historisch gesehen, Waren die oft gemeinsam beauftragt werden auch gruppiert eingelagert werden.

Zur Erfüllung eines Auftrags müssen alle dem Auftrag zugewiesenen Waren aus einer aus den Lagerregalgassen 9 bestimmten Auftragslagerregalgasse, auftragsrein ausgelagert werden. Dazu wird erfindungsgemäß wie folgt vorgegangen.

Zunächst werden gemischte Gebinde 200 eines Auftrags erzeugt. Dazu wird eine Kommissionierstation 14 über eine Kommissionier-Förderstrecke 15 mit sortenreinen Gebinden 100 aus dem Lager 3 versorgt. Diese Versorgung kann auch über einen zwischengeschalteten Puffer erfolgen. Darauf folgend werden an der jeweiligen Kommissionierstation 14 aus den Waren der sortenreinen Gebinde 100, welche für den Auftrag vorgesehen sind, die benötigten gemischten Gebinde 200 zusammengestellt.

Anschließend werden die auftragsgemäß zusammengestellten gemischten Gebinde 200 über eine zweite Eingangs-Förderstrecke 16 in das Lager 3 bzw. Lagerregalgassen 9 eingelagert.

Die Eingangs-Förderstrecke 16 kann auch mit der Förderstrecke 15 zusammengeführt werden, so dass Ganzgebinde und gemischte Gebinde die Einlagerstrecken gemeinsam benutzen.

Dabei wird die Einlagergasse für die gemischten Gebinde 200 so gewählt, dass für die Konsolidierung mit weiteren Waren zur Erfüllung des Auftrags möglichst wenig Gebinde-Bewegungen nötig sind.

Es wird also jeweils eine Auftragslagerregalgasse dem Auftrag zugeordnet und dort das/die gemischte(n) Gebinde 200 eingelagert. Die Einlagerung von mindestens einem gemischten Gebinde 200, welches für einen Auftrag vorgesehen ist, bestimmt somit die Auftragslagerregalgasse für alle weiteren Waren/Gebinde des Auftrags.

Um die Zusammenstellung der Waren des Auftrags zu vervollständigen, werden sortenreine Gebinde 100, welche dem Auftrag zugeordnet sind, aber sich nicht in der festgelegten Auftragslagerregalgasse 9 befinden, innerhalb der Lagerregale 8 in die Auftragslagerregalgasse 9 umgelagert. Dies geschieht durch den beschriebenen Quertransport innerhalb der Lagerregale 8. Hierbei werden Gebinde 100 durch Querförderplätze 17 zwischen den Lagerregalgassen 9 durchgereicht, um sie einer anderen Lagerregalgasse 9 zuzuführen (vgl. oben).

Letztendlich werden die gemischten und sortenreinen Gebinde 100, 200, welche dem Auftrag zugeordnet sind, in auftragsreiner sortierter Reihenfolge über die Ausgangs-Förderstrecken 13 der Auftragslagerregalgasse ausgelagert. "Auftragsrein" bedeutet hier, dass alle Waren des Auftrags hintereinander und gemeinsam ausgelagert werden. Bevorzugterweise erfolgt dies sogar in einer gewünschten Reihenfolge, welche z.B. der im Auftrag gewünschten Auspackreihenfolge (Shop Layout) entspricht.

## Patentansprüche

1. Verfahren zur Auslagerung von Waren (a, b, c) zur Auftragserfüllung aus einem Verteilzentrum mit einem Lager (3), das Lagerregale (8) mit Lagerregalgassen (9) aufweist, wobei der Auftrag eine Zusammenstellung von Waren (a, b, c) aus sortenreinen (100) und gemischten Gebinden (200) ist, die Waren (a, b, c) zunächst in Form von sortenreinen Gebinden (100) in die Lagerregale (8) eingelagert werden und nach Vorliegen des Auftrags alle dem Auftrag zugewiesenen Waren (a,b,c) aus einer bestimmten Auftragslagerregalgasse (9) der Lagerregale (8) ausgelagert werden,
wozu als sortenreine Gebinde in den Lagerregalen (8) vorliegende Waren (a, b, c), die zur Erfüllung des Auftrags nötig sind, aber nicht innerhalb der bestimmten Auftragslagerregalgasse (9) der Lagerregale (8) vorliegen, innerhalb der Lagerregale (8) durch einen Quertransport aus einer anderen Lagerregalgasse (9) in die Auftragslagerregalgasse (9) umgelagert werden,
und
wozu mindestens ein gemischtes Gebinde (200) des Auftrags durch Kommissionieren aus sortenreinen Gebinden (100) erstellt wird und dazu mindestens eine Kommissionierstation (14) mit entsprechenden sortenreinen Gebinden (100) aus denselben Lagerregalen (8) versorgt wird und das dort erstellte mindestens eine gemischte Gebinde (200) in die Auftragslagerregalgasse (9) der Lagerregale (8) eingelagert wird,
und
schließlich auftragsreines Auslagern aller Waren (a, b, c) des Auftrags umfassend sortenreine Gebinde (100) und gemischte Gebinde (200) aus der bestimmten Auftragslagerregalgasse (9), wobei die Auftragslagerregalgasse (9) durch die Einlagerung der kommissionierten gemischten Gebinde (200) vorgegeben wird.

2. Verfahren nach Anspruch 1, **dadurch gekennzeichnet, dass** Gebinde (100, 200) sortiert, insbesondere gemäß einer späteren Auspackreihenfolge, ausgelagert werden.

3. Verfahren nach einem der vorhergehenden Ansprüche, **dadurch gekennzeichnet, dass** die Gebinde (100, 200) innerhalb der Lagerregale (8) und der Lagerregalgassen (9) durch Regalbediengeräte (10) bewegt werden.

4. Verfahren nach Anspruch 3, **dadurch gekennzeichnet, dass** die Gebinde (100, 200) innerhalb der Lagerregale (8) und der Lagerregalgassen (9) durch Shuttle-Fahrzeuge (10) bewegt werden.

5. Verfahren nach einem der Ansprüche 3 oder 4, **dadurch gekennzeichnet, dass** Gebinde (100) zwischen benachbarten Lagerregalgassen (9) über Querförderplätze (17) innerhalb benachbarter Lagerregale (8) mittels Bewegung durch die Lastaufnahmemittel der Regalbediengeräte (10) quertransportiert werden.

6. Verfahren nach einem der vorhergehenden Ansprüche, **dadurch gekennzeichnet, dass** der Quertransport der Gebinde (100) zwischen Lagerregalgassen (9) über gassenwechselnde Regalbediengeräte (10) stattfindet.

7. Verfahren nach einem der vorhergehenden Ansprüche 3 - 6, **dadurch gekennzeichnet, dass** der Quertransport der Gebinde (100) zwischen Lagerregalgassen (9) über gassenwechselnde Shuttle-Fahrzeuge (10) stattfindet.

8. Verfahren nach Anspruch 7, **dadurch gekennzeichnet, dass** ein Gassenwechsel über dedizierte Fahrwege stattfindet.

## Claims

1. Method for removing goods (a, b, c) from storage for order fulfilment from a distribution centre having a store (3) comprising storage racks (8) having storage rack aisles (9), wherein the order is a compilation of goods (a, b, c) from single-type (100) and mixed (200) containers, the goods (a, b, c) are initially placed into storage in the storage racks (8) in the form of single-type containers (100) and, when an order is present, all the goods (a, b, c) assigned to the order are removed from a particular order storage rack aisle (9) of the storage racks (8),
for which purpose goods (a, b, c) present as single-type containers in the storage racks (8) which are required to fulfil the order but are not present within the particular order storage rack aisle (9) of the storage racks (8) are transferred within the storage racks (8) by a cross-transport from another storage rack aisle (9) into the order storage rack aisle (9),
and
for which purpose at least one mixed container (200) of the order is produced by picking from single-type containers (100) and at least one picking station (14) is supplied with corresponding single-type containers (100) from the same storage racks (8) and the thus produced at least one mixed container (200) is placed into storage in the order storage rack aisle (9) of the storage racks (8),
and
finally all the goods (a, b, c) of the order comprising single-type containers (100) and mixed containers (200) are removed from storage from the particular order storage rack aisle (9) as determined by the order, wherein the order storage rack aisle (9) is predetermined by the placing into storage of the picked, mixed containers (200).

2. Method as claimed in claim 1, **characterised in that** containers (100, 200) are removed from storage in a sorted manner, in particular according to a subsequent unpacking sequence.

3. Method as claimed in any one of the preceding claims, **characterised in that** the containers (100, 200) are moved within the storage racks (8) and the storage rack aisles (9) by rack serving apparatuses (10).

4. Method as claimed in claim 3, **characterised in that** the containers (100, 200) are moved within the storage racks (8) and the storage rack aisles (9) by shuttle vehicles (10).

5. Method as claimed in any one of claims 3 or 4, **characterised in that** containers (100) are cross-transported between adjacent storage rack aisles (9) via cross-conveyance locations (17) within adjacent storage racks (8) by means of movement by the load picking-up means of the rack serving apparatuses (10).

6. Method as claimed in any one of the preceding claims, **characterised in that** the cross-transport of the containers (100) between storage rack aisles (9) takes place via aisle-changing rack serving apparatuses (10).

7. Method as claimed in any one of the preceding claims 3-6, **characterised in that** the cross-transport of the containers (100) between storage rack aisles (9) takes place via aisle-changing shuttle vehicles (10).

8. Method as claimed in claim 7, **characterised in that** an aisle change takes place via dedicated travel paths.

## Revendications

1. Procédé de déstockage d'articles (a, b, c) pour l'exécution de commandes à partir d'un centre de distribution comprenant un magasin (3) qui comporte des rayonnages de magasin (8) munis d'allées de rayonnages de magasin (9),
la commande étant un regroupement d'articles (a, b, c) provenant de contenants mono-articles (100) et multi-articles (200), les articles (a, b, c) étant stockés dans les rayonnages de magasin (8) initialement sous la forme de contenants mono-articles (100) et, après soumission de la commande, tous les articles (a, b, c) affectés à la commande étant déstockés depuis une allée de rayonnages magasin de commande (9) déterminée des rayonnages de magasin (8),
ce pour quoi des articles (a, b, c) qui sont présents dans les rayonnages de magasin (8) sous forme de contenants mono-articles, qui ont nécessaires à l'exécution de la commande mais qui ne sont pas présents dans l'allée de rayonnages de magasin de commande (9) des rayonnages de magasin (8), sont transférés à l'intérieur des rayonnages de magasin (8) par un transport transversal depuis une autre allée de rayonnages de magasin (9) jusque dans l'allée de rayonnages de magasin de commande (9),
et
ce pour quoi au moins un contenant multi-articles (200) de la commande est créé par préparation de commande à partir de contenants mono-articles (100) et pour cela au moins un poste de préparation de commandes (14) est alimenté en contenants mono-articles correspondants (100) provenant des mêmes rayonnages de magasin (8) et l'au moins un contenant multi-articles (200) alors créé est stocké dans l'allée de rayonnages de magasin de commande (9) des rayonnages de magasin (8), et
enfin le déstockage, spécifique à la commande, de tous les articles (a, b, c) de la commande comprenant des contenants mono-articles (100) et des contenants multi-articles (200) de l'allée de rayonnages de magasin de commande (9) déterminée, l'allée de rayonnages de magasin de commande (9) étant spécifiée par le stockage des contenants multi-articles (200) préparés pour la commande.

2. Procédé selon la revendication 1, **caractérisé en ce que** les contenants (100, 200) sont déstockés de manière triée, notamment suivant un ordre de déballage ultérieur.

3. Procédé selon l'une des revendications précédentes, **caractérisé en ce que** les contenants (100, 200) sont déplacés à l'intérieur des rayonnages de magasin (8) et des allées de rayonnages de magasin (9) par des gerbeurs (10).

4. Procédé selon la revendication 3, **caractérisé en ce que** les contenants (100, 200) sont déplacés à l'intérieur des rayonnages de magasin (8) et des allées de rayonnages de magasin (9) par des véhicules navettes (10).

5. Procédé selon la revendication 3 ou 4, **caractérisé en ce que** des contenants (100) sont transportés transversalement entre des allées de rayonnages de magasin (9) adjacentes via des emplacements de transporteurs transversaux (17) à l'intérieur de rayonnages de magasin (8) adjacents par déplacement par le biais des moyens de réception de charge des gerbeurs (10).

6. Procédé selon l'une des revendications précédentes, **caractérisé en ce que** le transport transversal des contenants (100) entre les allées de rayonnages de magasin (9) étant effectué par des gerbeurs (10) de changement d'allée.

7. Procédé selon l'une des revendications 3 à 6 précédentes, **caractérisé en ce que** le transport transversal des contenants (100) entre les allées de rayonnages de magasin (9) étant effectué par le biais de véhicules navettes (10) de changement d'allée.

8. Procédé selon la revendication 7, **caractérisé en ce qu'**un changement d'allée est effectué par des itinéraires dédiés.
